# EUROPEAN PATENT SPECIFICATION

(11) **EP 3 888 329 B1**
(45) Date of publication and mention of the grant of the patent: **31.12.2025**
(21) Application number: 18826117.6
(22) Date of filing: 26.11.2018
(51) Int. Cl.: H04L 67/00, H04L 41/0895, H04W 4/50

(54) **METHODS, WIRELESS DEVICE AND NETWORK NODE FOR ENABLING NETWORK FUNCTIONS IN THE WIRELESS DEVICE**
VERFAHREN, DRAHTLOSE VORRICHTUNG UND NETZWERKKNOTEN ZUM ERMÖGLICHEN VON NETZWERKFUNKTIONEN IN DER DRAHTLOSEN VORRICHTUNG
PROCÉDÉS, DISPOSITIF SANS FIL ET NOEUD DE RÉSEAU PERMETTANT D'ACTIVER DES FONCTIONS DE RÉSEAU DANS LE DISPOSITIF SANS FIL

(43) Date of publication of application: 06.10.2021
(73) Proprietor: TELEFONAKTIEBOLAGET LM ERICSSON (PUBL), 164 83 Stockholm (SE)
(72) Inventor: ERIKSSON, Hans, 192 48 Sollentuna (SE); WESTBERG, Lars, 141 43 Huddinge (SE)
(74) Representative: Ericsson
(86) International application number: PCT/SE2018/051217
(87) International publication number: WO 2020/111988

(56) References cited:
- WO-A1-2017/168205
- US-A1- 2018 098 230
- US-A1- 2019 104 442

## Description

### Technical field

The present disclosure relates generally to a wireless device, a network node and methods therein, for enabling network functions in the wireless device.

### Background

In this disclosure, the term "wireless device" is used to represent any communication entity capable of radio communication with a wireless network by sending and receiving radio signals, such as e.g. mobile telephones, tablets, laptop computers and Machine-to-Machine, M2M, devices, also known as Machine Type Communication, MTC, devices. Another common generic term in this field is "User Equipment, UE" which could be used herein as a synonym for wireless device.

Further, the term "network node", is used herein to represent any node of a wireless network that is operative to communicates radio signals with wireless devices. The network node in this disclosure may refer to a base station, radio node, Node B, base transceiver station, access point, etc., although this disclosure is not limited to these examples. The network node in this disclosure may also refer to a node in the wireless network, such as a Radio Network Controller, RNC, that controls one or more base stations or radio nodes that communicate radio signals with wireless devices. The likewise commonly used term mobile network is sometimes used in this disclosure as a synonym for wireless network.

In recent years "cloud computing" has become a common way of acquiring processing resources from a pool of shared hardware and software resources, herein referred to as computing resources, which can be hired or leased by clients on a temporary basis whenever needed. Such resources are available from large data centers or the like which may be centralized and/or distributed more locally as distributed clouds, or "edge clouds", to reduce latency and the communication distance to clients. This means that the clients can reduce their investments in hardware and software by leasing computing resources in large data centers which are accessed over the Internet, which is an advantage particularly when the resources are used only in brief periods while they are not needed most of the time.

A server of today is commonly designed with a "Platform as a Service", PaaS, where a lower part of the server functionality has several common standard components, while the applications in a higher part are only using higher-layer Application Protocol Interfaces, APIs.

The above cloud computing has enabled virtualization of various network functions and an infrastructure of a communication network can be realized in the cloud. Thereby, Virtual Network Functions, VNFs, can be created and used in a virtualised infrastructure. This concept is generally also referred to as "Network Functions Virtualization", NFV. Virtualization has enabled a new mobile architecture with virtualization of various network functions in a mobile core and in a Radio Access Network, RAN. Standardization of virtualization of mobile network functions have been discussed in many forums such as ETSI-NFV, OpenNFV and the Next Generation Mobile Networks, NGMN, Alliance.

Strong motivations for developing virtualization of network functions include efficient operation, reduced investments and cost-efficient use of hardware platforms. It also gives network operators a simple way to change and upgrade their mobile networks with new features by changing to new software for the virtualised functions. As a result, the flexibility for deployment of new network functions has increased drastically by virtualization in the operator part of the mobile network.

One problem that limits the flexibility and fast deployment of new network features by virtualization techniques, is related to limitations in current wireless devices which have a pre-defined set of functions that are supported and defined in various standards. There is a strong "fixed" relation between wireless device, the RAN and the core network by way of standards, resulting in long lead-times to get devices enabled for new network features and protocols. The common procedure today is to perform 3GPP-standardization to define new protocols and features between wireless device and network, which is a lengthy process as such. This implies that innovations and developments become limited by delaying introduction of new features in the mobile network. In addition, different wireless devices and models thereof comply to different standard versions so that the mobile network must support not only the latest but also a multitude of (legacy) standard versions.

There are also cases when a standard supports a function but is not (yet) included in the implementation of wireless devices, such as header compression. In this case, the multi-vendor environments make it difficult to determine what functions can be deployed in the wireless device and the network, either RAN or core.

The current way of introducing new features in 3GPP based mobile networks and systems is by updating the standard and wait until new wireless devices have been produced and penetrated out in the network, which can take several years. Even if a new feature becomes a standard, it is not sure if the necessary functions will be included into the wireless device implementation. As a result, network innovation is hindered by slow deployment of the wireless devices.

Another problem in flexibility and fast time to market for feature updates in mobile networks, is that the interface between device and network is standardized and locked to specific message sequences that impact several parts of the involved functional entities in device, RAN and core. Thereby, the network services defined in 3GPP cannot be made fully autonomic and self-contained without changing the protocols (e.g. Non-Access Stratum, NAS and Radio Resource Control, RRC) between the wireless device and the mobile network which requires the lengthy process of standardization.

An example of a 5G core 3GPP Release 15 component is the Access Mobility management Functions, AMF, that include some services that are dependent on other network functions to work, and AMF is thus strongly dependent of those other functions. In NGNM 5G white paper (given as input to 3GPP), it is proposed to support connectivity transparently and seamlessly across different technologies and with full transparency for all customers, regardless of whether wireless or fixed access is utilized. To support any access technology, the protocols between device and network must be possible to change in a flexible way, without having to wait for new standards and new device models. US 2018/098230 A1 relates to a method for dynamic provisioning of a gateway role by a user device. US 2019/104442 A1 discloses a method for providing services to a roaming user equipment and relates to deployment of virtualized network functions at a base station.

### Summary

It is an object of embodiments described herein to address at least some of the problems and issues outlined above. It is possible to achieve this object and others by using a wireless device, a network node and methods therein as defined in the attached independent claims. Preferred embodiments are defined by the dependent claims.

### Brief description of drawings

The solution will now be described in more detail by means of exemplary embodiments and with reference to the accompanying drawings, in which:
Fig. 1 is a communication scenario illustrating a wireless device communicating with a network node of a wireless network comprising a radio access network and a core network.
Fig. 2A is a flow chart illustrating a procedure in a wireless device, according to some example embodiments.
Fig. 2B is a flow chart illustrating a procedure in a network node, according to further example embodiments.
Fig. 3 is a diagram illustrating commonly used protocol stacks in a wireless device, a 5G access network and a core network.
Fig. 4 is a block diagram illustrating how a wireless device can acquire virtualised network functions VNFs, according to further example embodiments.
Fig. 5 is a block diagram illustrating in more detail various units and functions in a wireless device and in a network node when software for VNFs are downloaded, according to further example embodiments.
Fig. 6 is a signaling diagram illustrating an example of a procedure when the solution is used involving the wireless device and the network node of Fig. 5, according to further possible embodiments.
Fig. 7 is a block diagram illustrating another example of how a network node and a wireless device may be structured, according to further possible embodiments.

### Detailed description

Briefly described, a solution is provided to enable simplified and rapid deployment of network functions in a wireless device without having to wait for standardization and without having to design and produce a new device model that is capable of using the network functions which may have been updated for improved performance of the wireless device and/or a wireless network serving the wireless device. This can be accomplished by downloading any necessary virtual network functions from a network node to the wireless device and deploying the network functions in a virtual driver in the wireless device. Thereby, any improved network functions can be deployed in the wireless device by means of the virtual driver which thus can control the device in any desired manner in collaboration with the network without implementing the functions in the standard. The virtual network functions can be updated at any time in the virtual driver by repeating the downloading procedure.

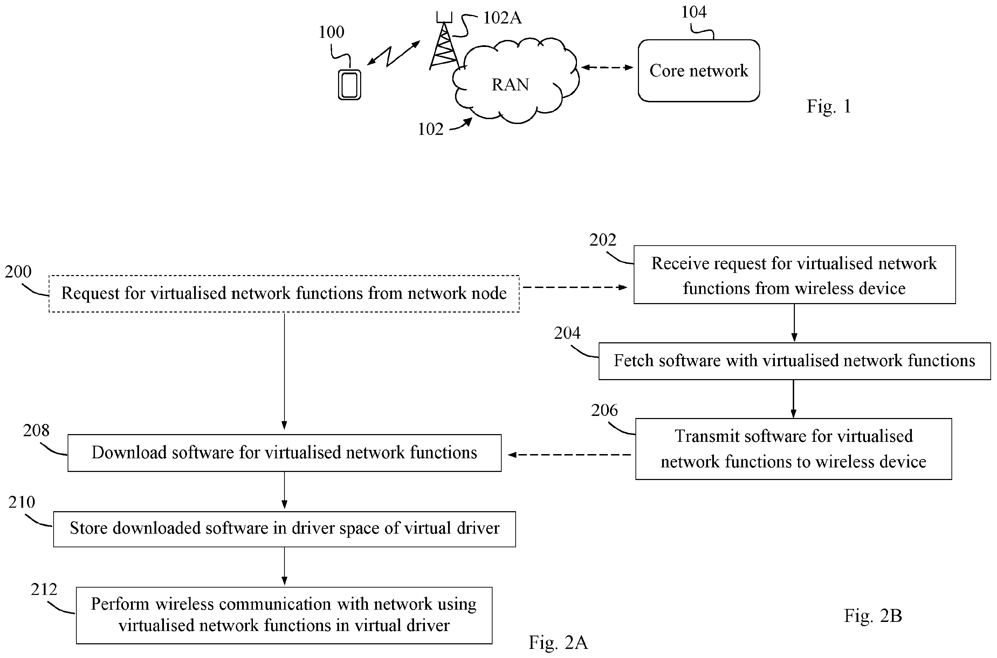

The solution will now be described in terms of functionalities in a wireless device and in a network node, respectively. An example communication scenario where the solution could be employed is illustrated in **Fig.** 1 involving a wireless device 100 which is connected by radio link to a serving network node 102A of a Radio Access Network, RAN, 102 which provides connection to a core network 104, sometimes simply referred to as the core. The above-mentioned virtual network functions can be downloaded from the network node 102A to the wireless device 100 over a radio interface, where any suitable signals, messages and protocols could be used which are of no particular significance to the examples and embodiments herein, and thus not necessary to describe in any detail. Some non-limiting but illustrative examples of the virtual network functions will be described later below.

An example of how the solution could be employed in terms of actions performed by a wireless device such as the wireless device 100, is illustrated by the flow chart in **Fig. 2A****.** Further, an example of how the solution may be employed in terms of actions performed by a network node such as the network node 102A, is illustrated by the flow chart in **Fig. 2B****,** which interacts with the procedure of Fig. 2A in a manner to be described below. Figs 2A and 2B will now therefore be described jointly as a logical sequence and with further reference to Fig. 1, although these procedures are not limited to the example of Fig. 1.

Fig. 2A thus illustrates a procedure that could be performed by the wireless device 100, for enabling network functions in the wireless device when communicating with a wireless network 102, 104. Some optional example embodiments that may be used in this procedure will also be described. Fig. 2B illustrates a procedure that could be performed by the network node 102A, for enabling network functions in the wireless device 100, which functions can be used when the wireless device 100 communicates with a wireless network 102, 104. Some optional example embodiments that may be used in this procedure will be described as well.

A first **action 200** illustrates that the wireless device 100 may request for software with virtualised network functions from the serving network node 102A. An **action 202** illustrates that the network node 102A receives from the wireless device 100 a request for software with virtualised network functions. In another **action 204,** the network node 102A fetches the requested software with virtualised network functions from a software storage which may reside in the network node 102A itself or elsewhere in the network so that it can be accessed by the network node 102A.

In a next **action 206,** the network node 102A transmits the requested software with virtualised network functions to the wireless device 100 in response to said request. A corresponding **action 208** illustrates that the wireless device 100 accordingly downloads the software comprising virtualised network functions from the serving network node 102A in the wireless network. Expressed differently, it can also be said that the wireless device 100 somehow acquires the software comprising virtualised network functions in action 208, either by active request or by simply accepting an offer or notification from the network node 102A indicating that the software has become available, e.g. to replace and update one or more virtualised network functions previously received/downloaded as software.

In a next **action 210,** the wireless device 100 stores the downloaded software in a driver space in the wireless device, which is more or less empty or has at least room for the downloaded software to be installed and stored. Thereby, a virtual driver has been created in the wireless device 100 comprising virtualised network functions implemented and controlled by the downloaded software. As a result, the virtual driver will then control operation of the device 100 so that the device 100 can interact with the network 102, 104 in a new or updated manner that is otherwise only possible to achieve by standardization of communication protocols and various needed parameters. A new or modified communication protocol can thus be implemented in the wireless device 100 by means of the virtual network functions in the virtual driver, and without requiring standardization.

A final **action 212** illustrates that the wireless device 100 performs various communications with the wireless network 102, 104, using the virtualised network functions of the downloaded software as a virtual driver in the wireless device. By employing virtualised network functions in a virtual driver, it is not necessary to implement the network functions by standardization of protocols and parameters, and it becomes possible to introduce and/or modify any network related functions very simply an in very short time, that is without having to wait for new standard and new device models.

Some examples of optional embodiments that may be employed in the above procedure of Fig. 2A will now be described. In some example embodiments, the virtualised network functions may comprise at least one of: virtualised mobile access functions and virtualised core network functions.

Some non-limiting examples of the above-mentioned virtualised mobile access functions include: layer 2 (L2) functions, radio modem functions, selection of Core network, communication and data transfer functions to the core network 104 as defined in 3GPP reference points S1 (control and user plane), N2, N3 and similar future 3GPP and non-3GPP defined messages and user plane data transferring functions with core network (using L2/L3 technologies such as GTP, Ethernet or IP), RAN to wireless device communication using radio control channel messages to exchange state information and service requests between RAN and device, user plane optimization functions such as header compression, radio cyphering function, and other future RAN functions with new messages sequences and user plane optimizations.

Some non-limiting examples of the above-mentioned virtualised core network functions include: mobility management, idle/active state management, authentication functions, service request and wireless device attach request and network slice selection functions, paging functions, security key exchange and cyphering function and future enhancements and new messages to handle new and improved network functions that a wireless device can request (e.g. object work load processing request from the wireless device to the core network to process a data object).

In some example embodiments, the above-mentioned virtualised mobile access functions may be based on a 5th Generation Access Network, 5G-AN protocol, and the above-mentioned virtualised core network functions may be based on a Non-Access Stratum Mobility Management, NAS-MM protocol.

In some other example embodiments, the virtualised network functions may comprise at least one of: control plane functions and user plane functions, which is a somewhat different categorisation of the network functions than the above-mentioned mobile access functions and core network functions.

Some non-limiting but illustrative examples of virtualised control plane functions may include: access request message transfer using radio control channel, messages to exchange state information, service requests between RAN and device, and also functions related to mobility management such as device idle/active state management, authentication, network resource service request and device attach request, paging, security key exchange and cyphering.

Some non-limiting but illustrative examples of virtualised user plane functions may include: data transferring over radio channel using traffic channels, user plane optimization such as header compression, radio cyphering, and functions related to Layer 2&3 data transferring protocols e.g. Ethernet, IP protocols.

In another example embodiment, the software downloaded in action 208 may comprise a software image of a virtualised driver. The technique of using software images is well-known as such in the field of virtualization, which can thus be applied in the embodiments and examples herein.

In another example embodiment, said downloading may be performed as part of a registration procedure when the wireless device 100 is attached to the wireless network. Thereby, the wireless device 100 can easily be equipped with the most recent and up-to-date network functions even before starting to communicate with the wireless network 102, 104 in action 212 after attachment. Further, the network has the possibility to adapt and "tailor" the network functions in the wireless device 100, e.g. depending on its specific capabilities and/or requirements for network services.

If the latter embodiment is used, another example embodiment may be that said downloading in action 208 and storing in action 210 are repeated whenever the wireless device 100 executes a registration procedure, for updating the virtualised network functions of the virtual driver. A registration procedure can thus be a suitable trigger to update the virtual driver and its network functions in the wireless device 100. For example, a management function in the network may force a device to re-register again with the network. For example, a de-registration could be sent from the network to the device which then will make a new registration request. This way, a new updated virtual driver could be downloaded and deployed in the device.

In another example embodiment, said downloading in action 208 may alternatively or additionally be triggered by receiving a notification from the serving network node indicating that new software with updated virtualised network functions is available. In another example embodiment, the wireless device 100 may initiate said downloading by requesting said software with virtualised network functions from the serving network node 102A, which was illustrated in action 200.

Some examples of optional embodiments that may be employed in the above procedure of Fig. 2B will now be described. In some example embodiments, the virtualised network functions of the software fetched in action 204 may comprise at least one of: virtualised mobile access functions and virtualised core network functions. Examples of the virtualised mobile access functions and virtualised core network functions have been mentioned above.

In some other example embodiments, the virtualised network functions may comprise at least one of: virtualised mobile access functions and virtualised core network functions. In that case, further example embodiments include that the virtualised mobile access functions could be based on a 5th Generation Access Network, 5G-AN protocol, and the virtualised core network functions could be based on a Non-Access Stratum Mobility Management, NAS-MM protocol, which was also mentioned above for Fig. 2A.

In some other example embodiments, the virtualised network functions may comprise at least one of: control plane functions and user plane functions, which has likewise been mentioned above for Fig. 2A.

In another example embodiment, the software fetched by the network node 102A in action 204 and transmitted in action 206 may comprise a software image of a virtualised driver, which has likewise been mentioned above for Fig. 2A.

In another example embodiment, the network node 102A may perform said fetching and transmitting in actions 204, 206 as part of a registration procedure when the wireless device 100 is attached to the wireless network. In that case, another example embodiment include that the network node 102A may repeat said fetching and transmitting whenever the wireless device executes a registration procedure, for updating the virtualised network functions in the wireless device 100.

In another example embodiment, the network node 102A may transmit a notification to the wireless device prior to said receiving, the notification indicating that new software with updated virtualised network functions is available. This way, the network node 102A can trigger an update of the virtual driver and its network functions in the wireless device 100.

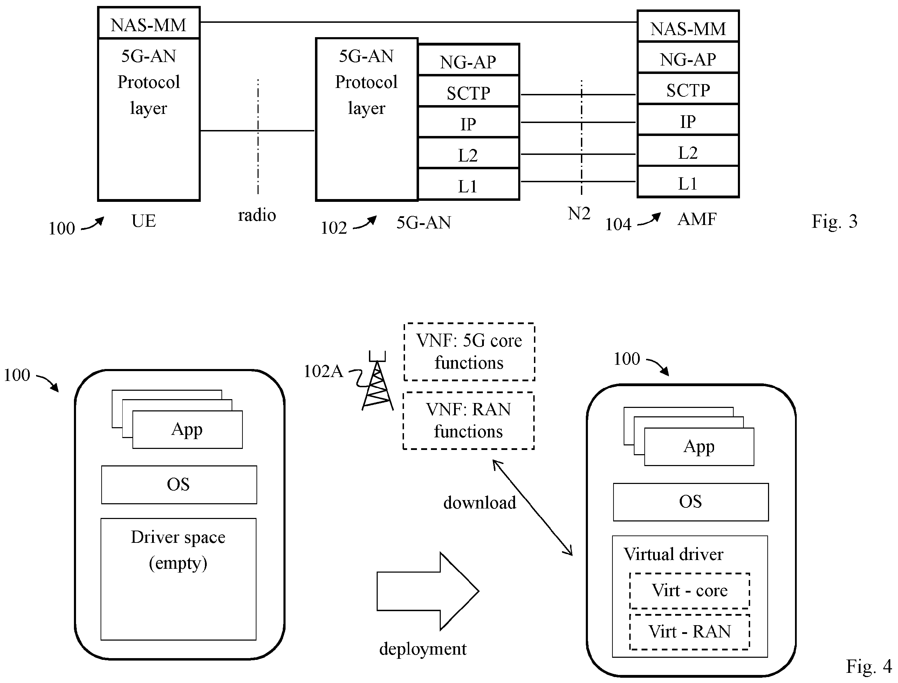

**Fig. 3** illustrates how different protocol layers and interfaces are typically employed by a wireless device 100, here denoted UE, network nodes of an access network 102, here denoted 5G-AN, and an AMF in a core network 104, which is a component in a 5G core 3GPP Release 15 with services that are dependent on other network functions to work, as also mentioned above. A radio interface is employed for communication over the 5G-AN protocol layer between the wireless device 100 and the access network 102, while an N2 interface is employed for communication over various different protocol layers between the access network 102 and the core network 104, as shown in this figure.

It was mentioned above that the virtualised network functions VNFs described herein may include virtualised mobile access functions and virtualised core network functions. An example of how a wireless device 100 can acquire such VNFs from a serving network node 102A, will now be described with reference to the block diagram in **Fig. 4****.** On the left side of this figure, the wireless device 100 is illustrated before downloading software for a virtual driver, where the wireless device 100 has an Operating System, OS, and a set of applications, App, installed. The OS may be based on Linux as a non-limiting example. The wireless device 100 further contains a driver space which is initially empty, or at least has enough free room to accommodate software for a virtual driver.

Deployment of a virtual driver in the wireless device 100 is schematically illustrated as the downloading of software for VNFs, including 5G core functions and RAN functions, from the network node 102A, which corresponds to actions 206, 208 above. The wireless device 100 stores the downloaded software for the virtual 5G core and RAN functions in the driver space as indicated by dashed boxes in the right side of the figure, which corresponds to action 210 above. Thereby, a virtual driver has been created in the wireless device 100, the virtual driver thus comprising the virtualised 5G core functions and RAN functions implemented and controlled by the downloaded software. Deployment of a virtual driver in the wireless device 100 may also be referred to as "bootstrapping of cloud" in the device's driver. It should be noted that the virtual 5G core and RAN functions may be divided into smaller sub-functions. The examples in this disclosure divides the functions in the driver to RAN and 5G core for simplicity, although the solution is not limited to this particular division of virtualised functions.

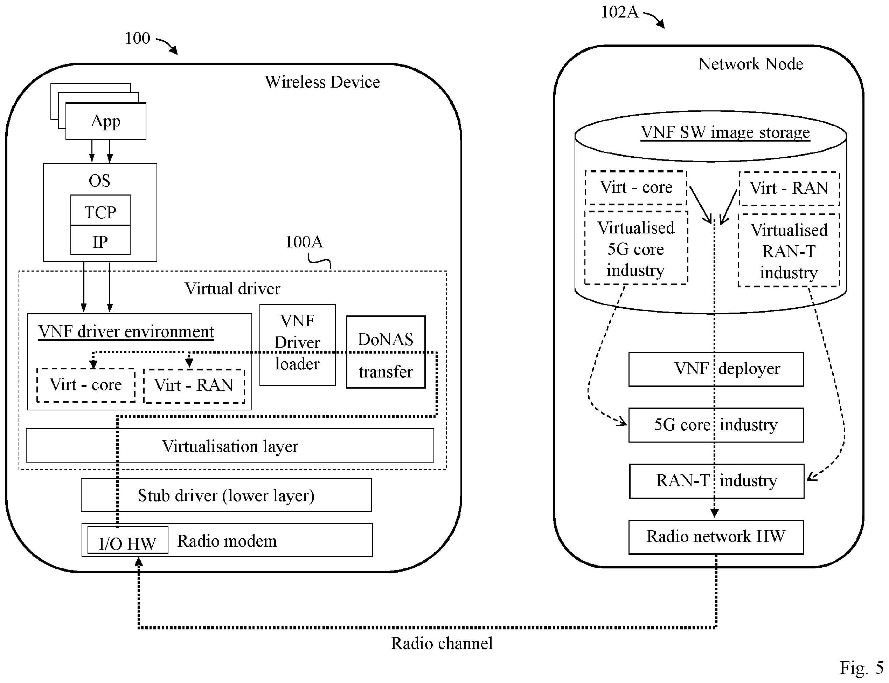

An example of how the wireless device 100 in Fig. 4 can use the deployed virtual driver with VNFs in communication with a serving network node 102A, will now be described with reference to an execution model illustrated by the block diagram in **Fig. 5****.** The wireless device 100 is illustrated here with a more detailed architecture, comprising the OS with a TCP/IP stack and the Apps, and also the virtual driver 100A which is schematically illustrated as a dashed box in the figure. The wireless device 100 has the following components after the deployment of virtual driver as shown in Fig. 4.
**VNF driver environment:** Comprising the downloaded software for the virtualised 5G core functions and RAN functions, as indicated by dashed boxes.
**VNF Driver Loader:** A function that can deploy virtualised software in the driver environment resources. The "VNF Driver Loader" has the basic function to request and download a Software (SW) image for a virtualised driver. The request is sent through RAN, and the SW-image is returned in TFTP packets, such as UDP/IP-packets, which have been transmitted to the device 100 in a downlink radio channel during deployment.
**Stub driver:** Basic communication functions to interwork with a wireless device radio modem Hardware (HW), and protocols to interwork with a "RAN-T industry" function in the network node 102A, to be described below. The wireless device 100 has an initial default "stub driver" interfacing some HW including basic functions to communicate over the radio link and towards the core network functions, such as basic RRC and NAS messages needed for the wireless device to make an attach request procedure to the network, e.g. as defined in 3GPP 23.502.
In addition, default functions to support Data over NAS (DoNAS as specified in 3GPP SA2) procedures that allows to send data over the control channels between wireless device and Core Network functions (i.e. MME in 4G or AMF in 5G). The virtual driver SW images version (for core and RAN) is requested by the VNF driver loader through a Data over NAS message, DoNAS, (e.g. SMS, or pure data over NAS message addressed to AMF or MME in the core network) which is sent to the 5G Core which identifies the message and sends it to the VNF deployer.
**DoNAS (Data over NAS) transfer:** A wireless device software for enabling transparent data transfer over a control signaling path in RAN and Core. The data may be sent as SMS formatted data using a SMS-transfer procedure. Alternatively, the request message could be sent transparently over the NAS protocol such as DoNAS.
In some restricted network, an initial sequence may be employed to download a "Driver Loader" SW image in case only specific authorized "VNF Driver loader" is approved to be used for the specific restricted network. Authorization may be done using a license key, e.g. imbedded in the SW. For example, the default VNF Driver loader may not be approved by the network and in this case a new VNF Driver loader needs to be installed initially.
This authorized VNF Driver loader may be replaced or removed after that all drivers are installed.

The network node 102A in this example has the following components.
**5G core industry:** Comprising 5G core functionalities required for a specific deployment of virtualised functions. Relevant procedures for the virtualization may include wireless device attach procedures, functions that verifies NAS versions, alternative protocols and/or extension of protocol. Verification and selection of communication protocol and functions required in the Core network and in the Virtual Core part of the virtual driver. Selection of protocols and functions based on subscription information and terminal type, e.g. received in an Attach message. Sending SW image transparent over the NAS protocol. It shall be understood that certain basic functions according to 3GPP specifications may be included to enable attach and download of SW images.
**VNF SW image storage:** Storage of virtual software image packages, both those applicable on the network side and on the wireless device driver side. **VNF deployer:** Deployment function to, download, install and verify new virtual driver software placed in the wireless device virtualization infrastructure layer.
**RAN-T industry:** The RAN technology (e.g. 4G, 5G, WiFi, future) used in the network with required functions and protocols that correspond to the Virtual RAN driver in the wireless device 100.

Fig. 5 further illustrates how a software image for a virtualised 5G core or virtualised RAN in the network node 102A could be transmitted over a radio channel to the corresponding virtualised 5G core in the wireless device 100. The network node 102A thus fetches the software image from the VNF-SW image storage and transmits it to the wireless device 100, in accordance with the above actions 204, 206. When arriving at the device 100, the software image is transported, as indicated by a dotted line, along a path through the radio modem, the stub driver, a virtualization layer, the DoNAS transfer and the VNF driver loader, and finally arriving at the virtualised 5G core in the VNF driver environment.

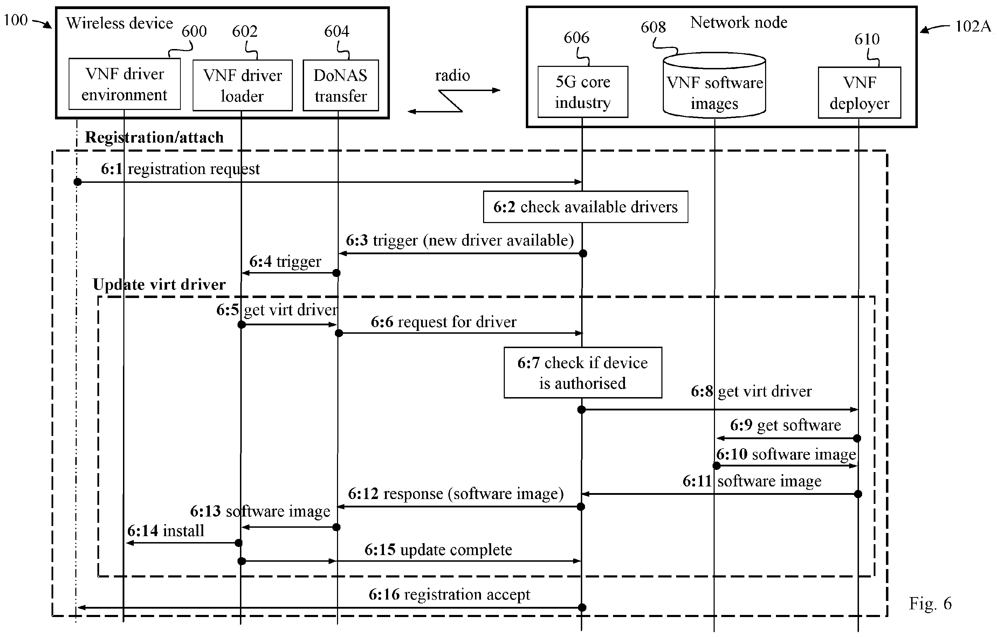

A more detailed practical example of how the virtualised functions may be deployed in the wireless device 100 as shown in Fig. 5, will now be described with reference to the signaling diagram in **Fig. 6****.** It was mentioned above that the fetching in action 206, the downloading in action 208 and the storing in action 210 could be repeated whenever the wireless device 100 executes a registration procedure, for updating the virtualised network functions of the virtual driver. This figure illustrates that the virtual driver is updated during such a registration/attach procedure is performed for the wireless device 100, as indicated by a first dashed box. Another dashed box within the first box illustrates the actual updating of the virtual driver. It should be understood that this procedure is a distinct procedure and does not rely on the Registration procedure.

In accordance with Fig. 5, Fig. 6 illustrates that the wireless device 100 comprises a VNF driver environment 600, a VNF driver loader 602 and a DoNAS transfer 604, and that the network node 102A comprises a 5G core industry 606, a VNF software image storage 608 and a VNF deployer 610. All these components have been described above for Fig. 5.

### Action 6:1

The wireless device 100 sends a Registration Request according to the procedure defined in 3GPP TS 23.502, to the 5G Core industry 606. For example, the 5G Core industry may be a tailor-made core network and RAN that has limited, or extended functionalities, alternative different set of messages between wireless device and network (both on RAN and Core network interfaces), enabling usage of the same network for many different types of access technologies and end user device types.

### Action 6:2

During the registration procedure, the core network will check type of wireless device, subscription profile, whether the device is authorized to update driver, and whether there are new drivers available that must be used, or preferred to be used, by the core network.

### Action 6:3

The 5G core industry 606 sends a "Trigger" message to the DoNAS transfer 604 to update the driver, optionally the driver type and version is included in the trigger message. The Trigger message is sent over radio as a Data over NAS message; which could be sent as included in SMS, or as a transparent data over NAS procedure, Both procedures are available and defined in 3GPP specifications.

### Action 6:4

When the Trigger message is received by DoNAS transfer 604, the message type (NAS information) indicates that it is a message to be sent to Driver loader and the Trigger message is therefore forwarded to Driver loader 602.

### Action 6:5

"Get_virt_driver()" is a request from the wireless device 100 to get a download of a driver software from the network. This request is sent over SMS or directly to the DoNAS transfer 604. The DoNAS is sent in the control plane and does not require a complete user plane functionality to be installed in the wireless device before download of the virtualised RAN/Core functions. This message also include parameters (i.e. version and type of device) to inform the VNF-Deployer 610 about transfer capabilities and software format.

### Action 6:6

The request Get_virt_driver() is sent to the 5G core industry 606.

### Action 6:7

The Core network functions in the network node 102A will check for available device driver types and versions, and whether the wireless device 100 is authorized to update its virtual driver, e.g. as defined in a subscription service profile.

### Action 6:8

The 5G-core industry 606 transfers the request to VNF-deployer 610.

### Action 6:9

A message Get_software_image(virt_RAN, Virt_core) is sent from VNF-deployer 610 to VNF SW image storage 608, to fetch the new virtualised network functions therefrom.

### Action 6:10

A package "Software_image(virt_RAN, Virt_core)" is transferred to the VNF-deployer 610 which then selects the wireless device parts of RAN and core and may do some re-packing before sending it towards the wireless device 100.

### Action 6:11

The SW image is sent to the 5G core industry 606, where it is packaged into a Data over NAS message.

### Action 6:12

A response "Reply(Software_image(virt_RAN, Virt_core))" is sent from 5G core industry 606 as a DoNAS message over Radio to the wireless device 100.

### Action 6:13

When the response message is received by DoNAS transfer 604, the message type (NAS information) indicates that it is a message to be sent to the Driver loader 602 and the response message is accordingly forwarded to VNF Driver loader 602, including the SW images for core and RAN.

### Action 6:14

The VNF-Driver Loader 602 installs the SW images for core and RAN in the driver space by sending the messages "Installation(virt_RAN)" and "Installation(virt_core)" to the VNF driver environment 600. The VNF Driver Loader 602 also starts the execution of the software.

### Action 6:15

An Update complete message is sent to the 5G core industry 606 when the new Driver is installed and active. This update complete message may be forwarded to the VNF deployer 610 to verify the driver (not shown in this figure). In this case the VNF Deployer 610 may send an additional message request to the driver to verify that correct version and license of driver are installed, by sending a driver verification message to the Core network, which forwards this message as a data over NAS to the driver loader which checks and replies with requested information.

The driver verification may be initiated by the VNF deployer 610 at any time, and then the driver verification message could be sent to the Core network using Network Export Function, NEF. In this case, the VNF deployer 610 has no direct reference to Core network instance and needs an ingress point to the core network to find correct instance and to authorize the VNF driver loader 602 to update and to communicate with wireless device 100. Here the NEF is a possible mechanism that can be used.

### Action 6:16

To complete the Registration procedure, the message Registration Accept is sent back to the wireless device 100, which means that from now on the wireless device can communicate and request other services from the network.

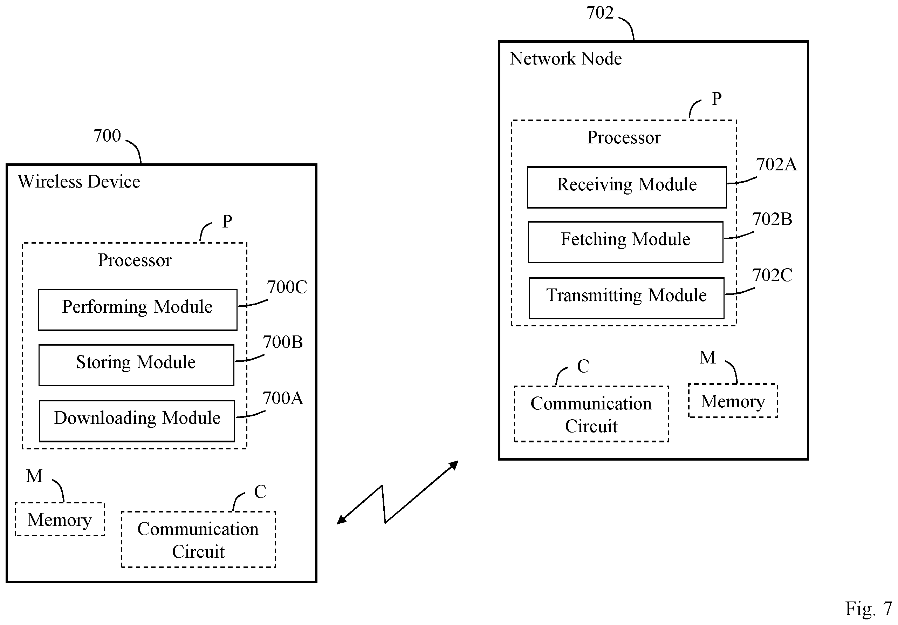

The block diagram in **Fig. 7** illustrates a detailed but non-limiting example of how a wireless device 700 and a network node 702, respectively, may be structured to bring about the above-described solution and embodiments thereof. The wireless device 700 and the network node 702 may be configured to operate according to any of the examples and embodiments of employing the solution as described herein, where appropriate. Each of the wireless device 700 and the network node 702 is shown to comprise a processor "P", a memory "M" and a communication circuit "C" with suitable equipment for transmitting and receiving radio signals in the manner described herein.

The communication circuit C in each of the wireless device 700 and the network node 702 thus comprises equipment configured for communication with each other using a suitable protocol for the communication depending on the implementation. The solution is however not limited to any specific types of radio signals, messages or protocols.

The wireless device 700 corresponds to the wireless device 100 described for Fig. 1 and may be configured to perform at least some of the actions of the flow chart in Fig. 2A and as follows. The wireless device 700 is arranged to enable network functions in the wireless device when communicating with a wireless network. The wireless device 700 is configured to download software comprising virtualised network functions from a serving network node 702 in the wireless network. This operation may be performed by a **downloading module 700A** in the wireless device 700, as also illustrated in action 208. The downloading module 700A could alternatively be named a receiving module or fetching module.

The wireless device 700 is further configured to store the downloaded software in a driver space in the wireless device. This operation may be performed by a **storing module 700B** in the wireless device 700, as also illustrated in action 210. The storing module 700B could alternatively be named a saving module or installing module.

The wireless device 700 is also configured to perform communications with the wireless network using the virtualised network functions of the downloaded software as a virtual driver in the wireless device. This operation may be performed by a **performing module 700C** in the wireless device 700, as also illustrated in action 212. The performing module 700C could alternatively be named a communicating module.

The network node 702 corresponds to the network node 102A described for Fig. 1 and may be configured to perform the actions of the flow chart in Fig. 2B and as follows.

The network node 702 is arranged to enable network functions in a wireless device 700, for use when the wireless device 700 communicates with a wireless network. The network node 702 is configured to receive from the wireless device 700 a request for software with virtualised network functions. This operation may be performed by a **receiving module 702A** in the network node 702, as also illustrated in action 202.

The network node 702 is also configured to fetch the requested software with virtualised network functions from a software storage. This operation may be performed by a **fetching module 702B** in the network node 702, as also illustrated in action 204. The fetching module 700B could alternatively be named a retrieving module or obtaining module.

The network node 702 is further configured to transmit the requested software with virtualised network functions to the wireless device in response to said request.

This operation may be performed by a **transmitting module 702C** in the network node 702, as illustrated in action 206. The transmitting module 702C could alternatively be named a sending module or providing module.

It should be noted that Fig. 7 illustrates various functional modules in the wireless device 700 and the network node 702, respectively, and the skilled person is able to implement these functional modules in practice using suitable software and hardware equipment. Thus, the solution is generally not limited to the shown structures of the wireless device 700 and the network node 702, and the functional modules therein may be configured to operate according to any of the features, examples and embodiments described in this disclosure, where appropriate.

The functional modules 700A-C and 702A-C described above may be implemented in the wireless device 700 and the network node 702, respectively, by means of program modules of a respective computer program comprising code means which, when run by the processor P causes the wireless device 700 and the network node 702 to perform the above-described actions and procedures. Each processor P may comprise a single Central Processing Unit (CPU), or could comprise two or more processing units. For example, each processor P may include a general purpose microprocessor, an instruction set processor and/or related chips sets and/or a special purpose microprocessor such as an Application Specific Integrated Circuit (ASIC). Each processor P may also comprise a storage for caching purposes.

Each computer program may be carried by a computer program product in each of the wireless device 700 and the network node 702 in the form of a memory having a computer readable medium and being connected to the processor P. The computer program product or memory M in each of the wireless device 700 and the network node 702 thus comprises a computer readable medium on which the computer program is stored e.g. in the form of computer program modules or the like. For example, the memory M in each node may be a flash memory, a Random-Access Memory (RAM), a Read-Only Memory (ROM) or an Electrically Erasable Programmable ROM (EEPROM), and the program modules could in alternative embodiments be distributed on different computer program products in the form of memories within the respective wireless device 700 and network node 702.

The solution described herein may be implemented in each of the wireless device 700 and the network node 702 by a computer program comprising instructions which, when executed on at least one processor, cause the at least one processor to carry out the actions according to any of the above embodiments and examples, where appropriate. The solution may also be implemented at each of the wireless device 700 and the network node 702 in a carrier containing the above computer program, wherein the carrier is one of an electronic signal, optical signal, radio signal, or computer readable storage medium.

While the solution has been described with reference to specific exemplifying embodiments, the description is generally only intended to illustrate the inventive concept and should not be taken as limiting the scope of the solution. For example, the terms "wireless device", "network node", "network functions", "driver space", "virtual network function, VNF", "virtual driver", "stub driver", "driver loader", "software image" and "industry" have been used throughout this disclosure, although any other corresponding entities, functions, and/or parameters could also be used having the features and characteristics described here. The solution may be implemented according to the appended embodiments. These embodiments are meant to be examples useful for understanding the invention. The present invention is only defined by the appended claims.

## Claims

1. A method performed by a wireless device (100) for enabling network functions in the wireless device when communicating with a wireless network, the method comprising:
- requesting (200) from a serving network node (102A) in the wireless network software comprising virtualized network functions,
- downloading (208) software comprising virtualised network functions from the serving network node (102A) in the wireless network, wherein the downloaded software comprises a software image of a virtualised driver,
- storing (210) the downloaded software in a driver space in the wireless device thereby creating a virtual driver in the wireless device comprising the virtualised network functions implemented and controlled by the downloaded software wherein, by means of the virtual network function in the virtual driver, new or modified communication protocols can be implemented in the wireless device, and
- performing (212) communications with the wireless network using the virtualised network functions of the downloaded software as a virtual driver in the wireless device, and
wherein the virtualised network functions comprise virtualised mobile access functions and virtualised core network functions.

2. A method according to claim 1, wherein said downloading is performed as part of a registration procedure when the wireless device is attached to the wireless network and/ or wherein said downloading and storing are repeated whenever the wireless device executes a registration procedure, for updating the virtualised network functions of the virtual driver.

3. A method according to any of claims 1-2, wherein said downloading is triggered by receiving a notification from the serving network node indicating that new software with updated virtualised network functions is available or wherein said downloading is initiated by requesting said software with virtualised network functions from the serving network node.

4. A wireless device (700) arranged to enable network functions in the wireless device when communicating with a wireless network, wherein the wireless device is configured to:
- request from a serving network node (702) in the wireless network software comprising virtualized network functions,
- download (700A) software comprising virtualised network functions from the serving network node (702) in the wireless network, wherein the downloaded software comprises a software image of a virtualised driver,
- store (700B) the downloaded software in a driver space in the wireless device thereby create a virtual driver in the wireless device comprising the virtualised network functions implemented and controlled by the downloaded software wherein, by means of the virtual network function in the virtual driver, implement new or modified communication protocols in the wireless device, and
- perform (700C) communications with the wireless network using the virtualised network functions of the downloaded software as a virtual driver in the wireless device, and
wherein the virtualised network functions comprise virtualised mobile access functions and virtualised core network functions.

5. A method performed by a serving network node (102A) of a wireless network, for enabling network functions in a wireless device (100) when communicating with the wireless network, the method comprising:
- receiving (202) from the wireless device a request for software with virtualised network functions,
- fetching (204) the requested software with virtualised network functions from a software storage, and
- transmitting (206) the requested software with virtualised network functions to the wireless device in response to said request wherein the fetched and transmitted software comprises a software image of a virtualised driver, and
wherein the virtualised network functions comprise virtualised mobile access functions and virtualised core network functions.

6. A method according to claim 5, wherein said fetching and transmitting are performed as part of a registration procedure when the wireless device is attached to the wireless network.

7. A method according to claim 6, wherein said fetching and transmitting are repeated whenever the wireless device executes a registration procedure, for updating the virtualised network functions in the wireless device.

8. A serving network node (702) arranged to enable network functions in a wireless device (100) when communicating with a wireless network, wherein the serving network node is configured to:
- receive (702A) from the wireless device a request for software with virtualised network functions,
- fetch (702B) the requested software with virtualised network functions from a software storage, and
- transmit (702C) the requested software with virtualised network functions to the wireless device in response to said request, wherein the fetched and transmitted software comprises a software image of a virtualised driver, and
wherein the virtualised network functions comprise virtualised mobile access functions and virtualised core network functions.

9. A serving network node (702) according to claim 8, wherein said fetching and transmitting are repeated whenever the wireless device executes a registration procedure, for updating the virtualised network functions in the wireless device.

10. A serving network node (702) according to any of claims 8-9, further comprising transmitting a notification to the wireless device prior to said receiving, the notification indicating that new software with updated virtualised network functions is available.

11. A computer program comprising instructions which, when executed on at least one processor, cause the at least one processor to carry out the method according to any one of claims 1-3 or the method according to any one of claims 5-7.

12. A carrier containing the computer program of claim 11, wherein the carrier is one of an electronic signal, optical signal, radio signal, or computer readable storage medium.

## Patentansprüche

1. Verfahren, durchgeführt durch eine drahtlose Vorrichtung (100), zum Ermöglichen von Netzwerkfunktionen in der drahtlosen Vorrichtung bei der Kommunikation mit einem drahtlosen Netzwerk, wobei das Verfahren umfasst:
- Anfordern (200) von Software, die virtualisierte Netzwerkfunktionen umfasst, von einem versorgenden Netzwerkknoten (102A) in dem drahtlosen Netzwerk,
- Herunterladen (208) von Software, die virtualisierte Netzwerkfunktionen umfasst, von dem versorgenden Netzwerkknoten (102A) in dem drahtlosen Netzwerk, wobei die heruntergeladene Software ein Software-Image eines virtualisierten Treibers umfasst,
- Speichern (210) der heruntergeladenen Software in einem Treiberbereich in der drahtlosen Vorrichtung, wodurch ein virtueller Treiber in der drahtlosen Vorrichtung erzeugt wird, der die durch die heruntergeladene Software implementierten und gesteuerten virtualisierten Netzwerkfunktionen umfasst, wobei mittels der virtuellen Netzwerkfunktion in dem virtuellen Treiber neue oder modifizierte Kommunikationsprotokolle in der drahtlose Vorrichtung implementierbar sind, und
- Durchführen (212) von Kommunikationen mit dem drahtlosen Netzwerk unter Verwendung der virtualisierten Netzwerkfunktionen der heruntergeladenen Software als ein virtueller Treiber in der drahtlosen Vorrichtung, und
wobei die virtualisierte Netzwerkfunktionen virtualisierte Mobilitätszugangsfunktionen und virtualisierte Kernnetzwerkfunktionen umfassen.

2. Verfahren nach Anspruch 1, wobei das Herunterladen als Teil einer Registrierungsprozedur durchgeführt wird, wenn die drahtlose Vorrichtung an das drahtlose Netzwerk angebunden ist, und/oder wobei das Herunterladen und Speichern wiederholt werden, sobald die drahtlose Vorrichtung eine Registrierungsprozedur ausführt, um die virtualisierte Netzwerkfunktionen des virtuellen Treibers zu aktualisieren.

3. Verfahren nach einem der Ansprüche 1-2, wobei das Herunterladen durch Empfangen einer Benachrichtigung von dem versorgenden Netzwerkknoten ausgelöst wird, die anzeigt, dass neue Software mit aktualisierten virtualisierten Netzwerkfunktionen verfügbar ist, oder wobei das Herunterladen durch Anfordern der Software mit virtualisierten Netzwerkfunktionen von dem versorgenden Netzwerkknoten initiiert wird.

4. Drahtlose Vorrichtung (700), die angeordnet ist, um Netzwerkfunktionen in der drahtlosen Vorrichtung bei der Kommunikation mit einem drahtlosen Netzwerk zu ermöglichen, wobei die drahtlose Vorrichtung konfiguriert ist, um:
- von einem versorgenden Netzwerkknoten (702) in dem drahtlosen Netzwerk Software anzufordern, die virtualisierte Netzwerkfunktionen umfasst,
- Software, die virtualisierte Netzwerkfunktionen umfasst, von dem versorgenden Netzwerkknoten (702) in dem drahtlosen Netzwerk herunterzuladen (700A), wobei die heruntergeladene Software ein Software-Image eines virtualisierten Treibers umfasst,
- die heruntergeladene Software in einem Treiberbereich in der drahtlosen Vorrichtung zu speichern (700B), wodurch ein virtueller Treiber in der drahtlosen Vorrichtung erzeugt wird, der die durch die heruntergeladene Software implementierten und gesteuerten virtualisierten Netzwerkfunktionen umfasst, wobei mittels der virtuellen Netzwerkfunktion in dem virtuellen Treiber neue oder modifizierte Kommunikationsprotokolle in der drahtlosen Vorrichtung zu implementieren sind, und
- Kommunikationen mit dem drahtlosen Netzwerk unter Verwendung der virtualisierten Netzwerkfunktionen der heruntergeladenen Software als ein virtueller Treiber in der drahtlosen Vorrichtung durchzuführen (700C), und
wobei die virtualisierte Netzwerkfunktionen virtualisierte Mobilitätszugangsfunktionen und virtualisierte Kernnetzwerkfunktionen umfassen.

5. Verfahren, durchgeführt durch einen versorgenden Netzwerkknoten (102A) eines drahtlosen Netzwerks, zum Ermöglichen von Netzwerkfunktionen in einer drahtlosen Vorrichtung (100) bei der Kommunikation mit dem drahtlosen Netzwerk, wobei das Verfahren umfasst:
- Empfangen (202) einer Anforderung für Software mit virtualisierten Netzwerkfunktionen von der drahtlosen Vorrichtung,
- Abrufen (204) der angeforderten Software mit virtualisierten Netzwerkfunktionen aus einem Softwarespeicher, und
- Übertragen (206) der angeforderten Software mit virtualisierten Netzwerkfunktionen an die drahtlose Vorrichtung als Reaktion auf die Anforderung, wobei die abgerufene und übertragene Software ein Software-Image eines virtualisierten Treibers umfasst, und
wobei die virtualisierte Netzwerkfunktionen virtualisierte Mobilitätszugangsfunktionen und virtualisierte Kernnetzwerkfunktionen umfassen.

6. Verfahren nach Anspruch 5, wobei das Abrufen und Übertragen im Rahmen einer Registrierungsprozedur durchgeführt wird, wenn die drahtlose Vorrichtung mit dem drahtlosen Netzwerk verbunden wird.

7. Verfahren nach Anspruch 6, wobei das Abrufen und Übertragen immer dann wiederholt wird, wenn die drahtlose Vorrichtung eine Registrierungsprozedur durchführt, um die virtualisierte Netzwerkfunktionen in der drahtlosen Vorrichtung zu aktualisieren.

8. Versorgender Netzwerkknoten (702), der so angeordnet ist, dass er Netzwerkfunktionen in einer drahtlosen Vorrichtung (100) bei der Kommunikation mit einem drahtlosen Netzwerk ermöglicht, wobei der dienende Netzwerkknoten wie folgt konfiguriert ist zum:
- Empfangen (702A) einer Anforderung für Software mit virtualisierten Netzwerkfunktionen von der drahtlosen Vorrichtung,
- Abrufen (702B) der angeforderten Software mit virtualisierten Netzwerkfunktionen aus einem Softwarespeicher und
- Übertragen (702C) der angeforderten Software mit virtualisierten Netzwerkfunktionen an die drahtlose Vorrichtung als Reaktion auf die Anforderung, wobei die abgerufene und übertragene Software ein Software-Image eines virtualisierten Treibers umfasst, und
wobei die virtualisierte Netzwerkfunktionen virtualisierte Mobilitätszugangsfunktionen und virtualisierte Kernnetzwerkfunktionen umfassen.

9. Versorgender Netzwerkknoten (702) nach Anspruch 8, wobei das Abrufen und Übertragen immer dann wiederholt wird, wenn die drahtlose Vorrichtung eine Registrierungsprozedur durchführt, um die virtualisierte Netzwerkfunktionen in der drahtlosen Vorrichtung zu aktualisieren.

10. Versorgender Netzwerkknoten (702) nach einem der Ansprüche 8-9, der ferner vor dem Empfang eine Benachrichtigung an die drahtlose Vorrichtung überträgt, wobei die Benachrichtigung anzeigt, dass neue Software mit aktualisierten virtualisierten Netzwerkfunktionen verfügbar ist.

11. Computerprogramm, das Anweisungen umfasst, die, wenn sie auf mindestens einem Prozessor ausgeführt werden, den mindestens einen Prozessor veranlassen, das Verfahren nach einem der Ansprüche 1-3 oder das Verfahren nach einem der Ansprüche 5-7 auszuführen.

12. Träger, der das Computerprogramm nach Anspruch 11 enthält, wobei der Träger eines von einem elektronischen Signal, einem optischen Signal, einem Funksignal oder einem computerlesbaren Speichermedium ist.

## Revendications

1. Procédé mis en œuvre par un dispositif sans fil (100) pour activer des fonctions réseau dans le dispositif sans fil lors de la communication avec un réseau sans fil, le procédé comprenant :
- la demande (200) à un nœud de réseau de service (102A) dans le logiciel de réseau sans fil comprenant des fonctions réseau virtualisées,
- le téléchargement (208) du logiciel comprenant des fonctions réseau virtualisées à partir du nœud de réseau de service (102A) dans le réseau sans fil, dans lequel le logiciel téléchargé comprend une image logicielle d'un pilote virtualisé,
- le stockage (210) du logiciel téléchargé dans un espace pilote du périphérique sans fil, créant ainsi un pilote virtuel dans le périphérique sans fil comprenant les fonctions réseau virtualisées mises en œuvre et commandées par le logiciel téléchargé, dans lequel, au moyen de la fonction réseau virtuelle du pilote virtuel, des protocoles de communication nouveaux ou modifiés peuvent être mis en œuvre dans le périphérique sans fil, et
- l'exécution (212) des communications avec le réseau sans fil en utilisant les fonctions réseau virtualisées du logiciel téléchargé comme pilote virtuel dans le périphérique sans fil, et
dans lequel les fonctions réseau virtualisées comprennent des fonctions d'accès mobile virtualisées et des fonctions de réseau central virtualisées.

2. Procédé selon la revendication 1, dans lequel ledit téléchargement est effectué dans le cadre d'une procédure d'enregistrement lorsque le dispositif sans fil est connecté au réseau sans fil et/ou dans lequel ledit téléchargement et ledit stockage sont répétés chaque fois que le dispositif sans fil exécute une procédure d'enregistrement, pour la mise à jour des fonctions réseau virtualisées du pilote virtuel.

3. Procédé selon l'une quelconque des revendications 1-2, dans lequel ledit téléchargement est déclenché par la réception d'une notification du nœud de réseau de service indiquant qu'un nouveau logiciel avec des fonctions réseau virtualisées mises à jour est disponible ou dans lequel ledit téléchargement est initié par la demande dudit logiciel avec des fonctions réseau virtualisées auprès du nœud de réseau de service.

4. Dispositif sans fil (700) conçu pour activer les fonctions réseau du dispositif sans fil lors de la communication avec un réseau sans fil, dans lequel le dispositif sans fil est configuré pour :
- envoi d'une demande à un nœud de réseau de service (702) dans le logiciel de réseau sans fil comprenant des fonctions réseau virtualisées,
- télécharger (700A) un logiciel comprenant des fonctions réseau virtualisées à partir du nœud de réseau de service (702) dans le réseau sans fil, dans lequel le logiciel téléchargé comprend une image logicielle d'un pilote virtualisé,
- stocker (700B) le logiciel téléchargé dans un espace pilote du périphérique sans fil, créant ainsi un pilote virtuel dans le périphérique sans fil comprenant les fonctions réseau virtualisées mises en œuvre et commandées par le logiciel téléchargé, dans lequel, au moyen de la fonction réseau virtuelle du pilote virtuel, des protocoles de communication nouveaux ou modifiés sont mis en œuvre dans le périphérique sans fil, et
- effectuer des communications (700C) avec le réseau sans fil en utilisant les fonctions réseau virtualisées du logiciel téléchargé comme pilote virtuel dans le périphérique sans fil, et
dans lequel les fonctions réseau virtualisées comprennent des fonctions d'accès mobile virtualisées et des fonctions de réseau central virtualisées.

5. Procédé mis en œuvre par un nœud de réseau de desserte (102A) d'un réseau sans fil, pour activer les fonctions réseau d'un dispositif sans fil (100) lors de la communication avec le réseau sans fil, le procédé comprenant :
- la réception (202) du périphérique sans fil d'une requête de logiciel avec des fonctions réseau virtualisées,
- la récupération (204) du logiciel demandé avec des fonctions réseau virtualisées à partir d'un stockage logiciel, et
- la transmission (206) du logiciel demandé avec des fonctions réseau virtualisées au périphérique sans fil en réponse à ladite demande, dans lequel le logiciel récupéré et transmis comprenant une image logicielle d'un pilote virtualisé, et
dans lequel les fonctions réseau virtualisées comprennent des fonctions d'accès mobile virtualisées et des fonctions de réseau central virtualisées.

6. Procédé selon la revendication 5, dans lequel la récupération et la transmission sont effectuées dans le cadre d'une procédure d'enregistrement lorsque le dispositif sans fil est connecté au réseau sans fil.

7. Procédé selon la revendication 6, dans lequel lesdites opérations de récupération et de transmission sont répétées chaque fois que le dispositif sans fil exécute une procédure d'enregistrement, pour la mise à jour des fonctions réseau virtualisées dans le dispositif sans fil.

8. Nœud de réseau de service (702) configuré pour activer les fonctions réseau d'un dispositif sans fil (100) lors de la communication avec un réseau sans fil, dans lequel le nœud de réseau de service est configuré pour :
- recevoir (702A) du périphérique sans fil une requête de logiciel avec des fonctions réseau virtualisées,
- récupérer (702B) le logiciel demandé avec des fonctions réseau virtualisées à partir d'un stockage de logiciels, et
- transmettre (702C) le logiciel demandé avec des fonctions réseau virtualisées au périphérique sans fil en réponse à ladite demande, dans lequel le logiciel récupéré et transmis comprend une image logicielle d'un pilote virtualisé, et
dans lequel les fonctions réseau virtualisées comprennent des fonctions d'accès mobile virtualisées et des fonctions de réseau central virtualisées.

9. Nœud de réseau de service (702) selon la revendication 8, dans lequel ladite récupération et transmission sont répétées chaque fois que le dispositif sans fil exécute une procédure d'enregistrement, pour mettre à jour les fonctions de réseau virtualisées dans le dispositif sans fil.

10. Nœud de réseau de service (702) selon l'une quelconque des revendications 8-9, comprenant en outre la transmission d'une notification au dispositif sans fil avant ladite réception, la notification indiquant qu'un nouveau logiciel avec des fonctions de réseau virtualisées mises à jour est disponible.

11. Programme informatique comprenant des instructions qui, lorsqu'elles sont exécutées sur au moins un processeur, amènent le au moins un processeur à mettre en œuvre le procédé selon l'une quelconque des revendications 1-3 ou le procédé selon l'une quelconque des revendications 5-7.

12. Support contenant le programme informatique selon la revendication 11, dans lequel le support est l'un d'un signal électronique, d'un signal optique, d'un signal radio ou d'un support de stockage lisible par ordinateur.
